Europäisches Patentamt

European Patent Office

Office européen des brevets

(11) Veröffentlichungsnummer: **0 292 764**
**A2**

## (12) EUROPÄISCHE PATENTANMELDUNG

(21) Anmeldenummer: 88107370.4

(22) Anmeldetag: 07.05.88

(51) Int. Cl.⁴: **G03B 37/04 , G02B 3/08**

(30) Priorität: 27.05.87 DE 3717906

(43) Veröffentlichungstag der Anmeldung:
30.11.88 Patentblatt 88/48

(84) Benannte Vertragsstaaten:
**DE FR GB**

(71) Anmelder: **Firma Carl Zeiss**

**D-7920 Heidenheim (Brenz)(DE)**

㊾ **DE FR**

(71) Anmelder: **CARL-ZEISS-STIFTUNG trading as CARL ZEISS**

**D-7920 Heidenheim (Brenz)(DE)**

㊾ **GB**

(72) Erfinder: **Raff, Horst, Dipl.-Ing.**
**Kepplerstrasse 1**
**D-7082 Oberkochen(DE)**
Erfinder: **Traeger, Rolf, Dipl.-Ing.**
**Hegelstrasse 124**
**D-7080 Aalen(DE)**

(54) **Weitwinkel-Beobachtungsfenster.**

(57) Die Erfindung betrifft Beobachtungsfenster mit Weitwinkel-Ausblick. Dieses Fenster wird realisiert durch eine Zerlegung des Beobachtungsraumes in Sektoren, welches entweder die Verwendung von mehreren unterschiedlichen prismatischen Körpern oder die Detektion an Punkten auf einer halbkugelartigen Fläche hinter einer planparallelen Scheibe bedingt.

## Fig.3

## Weitwinkel-Beobachtungsfenster

Die Erfindung betrifft ein Beobachtungsfenster, welches die Erfassung der durch das Fenster eintretenden Strahlung innerhalb eines Weitwinkelbereiches ermoglicht.

Der Sehwinkel von Objektiven liegt zwischen 5° und 180°, wobei letzterer bei der sogenannten Fischaugenoptik zu finden ist. Alle diese Objektive haben aber gemeinsam, daß man keinen Einfluß auf die äußere Begrenzungsfläche hat (welche insbesondere nicht plan gestaltet werden kann) und besonders bei großen Sehwinkeln eine Qualitätseinbuße in den Randregionen und Verzerrungen unvermeidbar sind. Diese Einschränkungen hinsichtlich der äußeren geometrischen Form und auch der Abbildungsqualität sind aber für bestimmte Anwendungen untragbar. Ein Weitwinkel-Ausblick wird sehr häufig für Überwachungs- und Kontrollaufgaben benötigt, wobei man bereichsweise Qualitätsminderungen nicht immer erlauben kann.

In der DE-PS 2 031 971 ist ein Gerät zum Beobachten eines großen Luftraumes durch eine Einrichtung aus facettenartig ausgebildeten und nach Bienenwabenart verbundenen Objektiven zu sehen, welche eine unebene äußere Begrenzungsfläche der Einrichtung bedingen und außerdem der Minimierung der Gerätegröße eine untere bauliche Größe setzen.

Aus der DE-OS 3 106 539 ist eine Linsenleiste für Kopiergeräte bekannt, wobei hinter jeder Linse ein Prisma angeordnet ist. Auf diese Weise ist eine plane äußere Begrenzungsfläche für den Strahleneintritt nicht realisierbar, insbesondere auch nicht der erwünschte Weitwinkel-Ausblick.

Ein IR-Sichtgerät für Rundumsicht ist aus der DE-OS 3 137 733 bekannt, wobei aber das ganze Gerät gedreht wird. Dagegen wird in der DE-OS 3 513 672 ein 360° Beobachtungssystem beschrieben, wobei ein Spiegel notwendig ist, um tote Winkel zu vermeiden.

Für Periskope ist in der DE-PS 977.796 ein Aussichtskof beschrieben, bei welchem eine Halbkugel aus einer Vielzahl von Planplatten zusammengesetzt ist.

Desweiteren ist aus der EP-PS 0 103 301 eine optische Weitwinkel-Einrichtung mit einem horizontalen Sehwinkel von 360° bekannt. Hierbei wird ein Ringspiegelprisma verwendet, mit welchem die eintreffende Strahlung auf ein Objektiv gespiegelt wird. Mit dieser Vorrichtung ist es möglich, mit einer planen äußeren Begrenzungsfläche eine 360°-Rundumsicht in einem kleinen Raumwinkelausschnitt zu realisieren. Die Verwendung einer optischen Ringlinse zur Vergrößerung des Raumwinkelausschnittes führt aber wieder zu einer nichtplanen äußeren Begrenzungsfläche des Beobachtungsfensters. Außerdem erlaubt die Einrichtung nicht das "Zusammenfügen mehrerer Ringspiegelprismen zu Vergrößerung des einsehbaren Raumwinkelausschnittes.

Der Nachteil des Standes der Technik ist darin zu sehen, daß man mit den erwähnten Einrichtungen nicht in der Lage ist, einen großen Raumwinkelbereich für ein Beobachtungsfenster mit einer planen bzw. glatten Außenfläche zu realisieren und/oder Qualitätseinbußen und Verzerrungen in Randregionen zu vermeiden, ohne eine Bewegung des Fensters ausführen zu mussen.

Der vorliegenden Erfindung liegt die Aufgabe zugrunde, ein Beobachtungsfenster für einen Weitwinkel-Ausblick zu erhalten, welches sich durch einen großen horizontalen Sehwinkel auszeichnet und bei Bedarf eine optimale Anpassung an photoempfindliche Detektoren ermöglicht.

Diese Aufgabe wird erfindungsgemäß durch den kennzeichnenden Teil des ersten Anspruchs dadurch gelöst, daß dieses Fenster aus mehreren unterschiedlichen, prismatisch wirkenden Bereichen aufgebaut ist, wobei die einzelnen Bereiche auf mindestens einen Detektor abgebildet werden.

Im Gegensatz zu den bekannten Beobachtungsfenstern wird erfindungsgemäß erstmals ein Beobachtungsfenster aus mehreren unterschiedlichen, prismatisch wirkenden Bereichen aufgebaut. Die prismatisch wirkenden Bereiche lenken die auf sie eintreffende Strahlung jeweils um einen bestimmten Winkel ab, wobei jeder Bereich den Einblick in einen begrenzten Raumwinkelbereich ermoglicht. Ein Ausblick in den gesamten Raum wird durch eine Vielzahl unterschiedlicher, bzw. unterschiedlich ausgerichteter prismatisch wirkender Bereiche erreicht.

Die Bereiche können aus einem optisch einheitlich wirkenden Material bestehen oder aber aus unterschiedlich wirkenden optischen Materialien aufgebaut sein. Bei der Auswahl der optischen Materialien ist zu beachten, daß eine Einschränkung des beobachtbaren Spektralbereiches erfolgt, wobei das Beobachtungsfenster als solches sowohl für den sichtbaren (z.B. mit Glas als optisches Material), infraroten (z.B. mit ZnSe als optisches Material) als auch ultravioletten (z.B. mit Quarz als optisches Material) Spektralbereich geeignet ist.

Die benötigten prismatischen Körper können je nach Anwendungsfall durch Keile, Prismen oder rotationssymmetrische Dispersionsprismen realisiert sein. Letztere bestehen aus einem kreisförmigen Ring, bei welchem durch einen schrägen Schnitt ein Teil des inneren Materials derart entfernt wurde, daß der ehemalige Zylinderring nun eine rotationssymmetrische, dispersionsprismatische Wirkung zeigt.

Bei dem Bau von Beobachtungsfenstern aus prismatisch wirkenden Bereichen ist zu beachten, daß man ab einem Grenzwinkel eine Totalreflexion erhält und auch schon vorher ein Teil des auffallenden Lichtes reflektiert wird. Es ist deshalb vorteilhaft, eine Oberflächenvergütung mit einer Entspiegelungsschicht der äußeren Begrenzungsfläche für die eintreffende Strahlung zur Verringerung der Reflexionsverluste bei streifend einfallendem Licht vorzunehmen.

Durch eine Einschränkung des betrachteten Spektralbereiches, wie dies beispielsweise bei der Verwendung eines Filters geschieht, kann man die chromatische Vergrößerungsdifferenz ausschalten. Aber auch insbesondere durch die Wahl der verschiedenen optischen Materialien kann Einfluß auf die chromatische Vergrößerungsdifferenz, als auch auf den Ablenkwinkel genommen werden. Nur wenn man Prismen als prismatisch wirkende Bereiche verwendet, lassen sich die Nachteile durch Dispersion und Verzeichnung ganz vermeiden, wobei die Prismenwinkel frei gewählt werden können. Entscheidend ist, daß die Brechung der eintretenden Strahlen gleich der Brechung der austretenden Strahlen ist. Es ist möglich, die Prismen aus mehreren Teilen aufzubauen und diese zu verkitten oder durch einen Luftspalt zu trennen, solange im letzteren Fall der Grenzwinkel der Totalreflexion nicht überschritten wird.

Je nach der Relevanz von Verzeichnung und Dispersion, des zu verwendenden Detektionsverfahrens, des zu betrachtenden Spektralbereiches und den Genauigkeitsanforderungen hinsichtlich der Ortsauflösung erlaubt die Erfindung die unterschiedlichsten Bauausführungen und Materialverwendungen, um zu einem für den jeweiligen Zweck optimalen Ergebnis zu kommen.

Ein besonderer Vorteil eines Beobachtungsfensters aus prismatisch wirkenden Bereichen ist die Möglichkeit eine vollkommen plane äußere Begrenzungsfläche des Beobachtungsfensters erhalten zu können. Dabei kann das Fenster durch eine lineare Aneinanderreihung mehrerer prismatisch wirkender Bereiche streifenförmig sein, wodurch ein Ausblick in einen fast 180°-Raumwinkelausschnitt möglich ist. Zur Erreichung einer 360°-Rundumsicht, wobei lediglich ein Bereich von der doppelten Größe des Grenzwinkels der Totalreflexion nicht einsehbar ist, kann ein solches streifenförmiges Segment um eine Achse rotieren, welche senkrecht oder parallel zur äußeren Begrenzungsfläche steht oder jeden anderen Winkel dazwischen einnehmen kann, wobei jeweils Raumwinkelausschnitte nacheinander abgescannt werden. Es ist aber auch möglich, aus den prismatisch wirkenden Bereichen eine Matrix aufzubauen, wobei man durch Verdrehung der prismatisch wirkenden Bereiche gegen die Hauptschnittebene einen Ausblick in eine Halbkugel erhält. Selbstverständlich kann man auch ein solches Beobachtungsfenster sowohl horizontal als auch vertikal rotieren lassen.

Für andere Anwendungszwecke ist es vorteilhaft, aus den prismatischen Körpern ein kreisförmiges Vieleck zu bilden. Hierbei erhält man eine facettenartige äußere Begrenzungsfläche. Die Verwendung von prismatischen Körpern zum Aufbau eines kreisförmigen Vielecks hat den Vorteil, daß man die einzelnen Beobachtungsbereiche ohne Verzerrungen mit Detektorarrays oder auch Detektorzeilen einsehen kann.

Anstelle des kreisförmigen Vielecks aus prismatischen Körpern kann aber auch eine Rotation eines Prismenstreifens oder einer -platte erfolgen, gegebenenfalls bei der Benutzung von Detektorzeilen kann das kreisförmige Vieleck durch ein rotationssymmetrisches Dispersionsprisma ersetzt werden.

Wenn man mehrere aus prismatischen Körpern aufgebaute kreisförmige Vielecke übereinander setzt, so kann man, mit der Einschränkung der Totalreflexion bei zu flachen Winkeln, fast eine 360°-Rundumsicht des Raumes erhalten. Wenn man den aus der Aufeinanderstapelung der obigen kreisförmigen Vielecke ergebenden Beobachtungsdom wie einen Kegelstumpf ausführt, wobei der Neigungswinkel des Kegelstumpfes dem Winkel der Totalreflexion entsprechen sollte, so hat man nur noch direkt unterhalb des Beobachtungsdomes einen kleinen Bereich, den man nicht einsehen kann und in dem der Beobachtungsdom gehalten werden kann.

Der Aufbau von Beobachtungsfenstern aus mehreren prismatischen Körpern hat außerdem die weiteren entscheidenden Vorteile, daß man die Größe der Raumwinkelausschnitte frei wählen kann und man zwischen den einzelnen Ausschnitten eine Befestigung der einzelnen prismatischen Körper derart vornehmen kann, daß das gesamte Beobachtungsfenster einer sehr großen Druckbelastung standhalten kann. Diese Vorteile sind auch bei dem Beobachtungsdom gegeben.

Ist eine planparallele Scheibe vorgegeben, so kann erfindungsgemäß hinter dieser Scheibe eine Objektiv-Detektor-Kombination unter Veränderung der Neigung der optischen Achse der Kombination bezüglich der Flächennormalen der planparallelen Scheibe auf einer halbkugelartigen Fläche bewegt werden, wobei die Bildaufnahme in diskreten Positionen erfolgt.

Anstelle der Bewegung einer Objektiv-Detektor-Kombination können auch mehrere Kombinationen bewegt werden, oder Objektiv-Detektor-Kombinationen in verschiedenen Aufnahmepositionen feststehend vorhanden sein.

Hinter den prismatischen Körpern des Beobachtungsfensters kann eine Fokussierung der einfallenden Strahlen auf einen strahlungsempfindlichen Detektor erfolgen. Hierbei werden die Raumwinkelbereiche von mehreren prismatischen Körpern auf einen oder mehrere Detektoren fokussiert, wobei besonders vorteilhaft die Bereichsvergrößerung gewisser Raumwinkelbereiche auf mehrere Detektoren ist. Es kann sich aber auch hinter jedem Prisma ein Objektiv mit einem dahinterliegenden Detektor befinden. Durch die Verwendung von Varioobjektiven kann man bei Bedarf die Scharfstellung auf gewisse Entfernungen erreichen. Über die Materialien der Objektive ist das zu den Materialien der prismatischen Körpern gesagte zu beachten.

Die Detektoren zur Bildaufnahme können sowohl punkt-, linien-als auch matrixförmig sein. Ihre geometrische Form bestimmt sich aus der jeweiligen Aufgabenstellung. Wird beim Bau eines Beobachtungsfensters ein bestimmter Detektortyp zugrunde gelegt und das Bild durch mehrere prismatische Körper auf einen Detektor abgebildet, so ist es vorteilhaft, die sich ergebenden Abschattungen zwischen einzelnen prismatischen Körpern zwischen die auf dem Detektor gegebenenfalls vorhandenen strahlungsempfindlichen Flächen zu legen. Dadurch bekommt man ein Bild auf dem Detektor, welchem man die Entstehung hinter der Vielzahl der prismatisch wirkenden Bereiche nicht mehr ansieht.

Die Lage des Detektors kann fest oder beweglich sein; in Bezug zu den prismatisch wirkenden Bereich als auch zu den Objektiven. Bei dem bewegten Detektor kann die Detektion an festen Aufnahmepositionen oder aus der Bewegung erfolgen.

Durch eine Mehrfachüberdeckung des zu beobachtenden Raumwinkelausschnittes ist eine dreidimensionale Auswertung des Beobachtungsraumes möglich, insbesondere eine Entfernungsbestimmung und eine Bewegungsdetektion. Es kann ein Teil des auf den Detektor erzeugten Bildes zum Aufbau eines Überblickbildes verwendet werden, während unter Zuhilfenahme überdeckender Teile eine Entfernungsbestimmung durch stereoskopische Auswertung erfolgen kann.

Durch Multipixil-Korrelation kann eine Bildverbesserung durch Erhöhung der Bildauflösung als auch eine Größenbestimmung der abgebildeten Objekte erfolgen.

Die Korrektur von Bildverzeichnungen kann direkt am prismatischen Körper, am Objektiv, durch Lageveränderung des Detektors oder durch eine Bildverarbeitung erfolgen.

Vor der glatten Außenfläche des Beobachtungsfensters aus prismatischen Körpern kann sich ein Schutzfenster befinden. Mit diesem können die prismatischen Körper fest verbunden oder durch ein Zwischenmedium optisch gekoppelt sein.

In dem Zwischenraum zwischen dem eigentlichen Beobachtungsfenster und Schutzfenster kann sich in besonders vorteilhafter Weise ein Gas oder eine Flüssigkeit mit einem Brechungsindex größer oder gleich dem der Materialien der Fenster befinden. Außerdem kann dieses Kopplungsmedium dazu verwendet werden, eine Kühlung der Fenster bei starker thermischer Beanspruchung zu bewirken.

Die Erfindung wird im folgenden anhand von Ausführungsbeispielen, unter Bezugnahme auf die beiliegenden Figuren näher erläutert, wobei die nachfolgenden Beispiele der Verwendung von prismatischen Körpern für den Bau von Beobachtungsfenstern keinen abschließenden Charakter für die Erfindung haben und weitere vorteilhafte Ausgestaltungen der Erfindung beinhalten.

Es ist zu sehen in

Figur 1 ein Weitwinkel-Ausblick hinter einer planparallelen Scheibe mit bewegter Objektiv-Detektor-Kombination;

Figur 2 ein Ausschnitt aus einem Beobachtungsfenster, welches aus prismatischen Körpern aufgebaut ist, mit einer Objektiv-Detektor-Kombination hinter jedem prismatischen Körper;

Figur 3 ein Schnitt durch ein Beobachtungsfenster, welches aus prismatischen Körpern aufgebaut ist, mit Begrenzungsflächen der prismatischen Körper senkrecht zur äußeren Begrenzungsfläche des Beobachtungsfensters;

Figur 4 ein Schnitt wie bei Figur 3, wobei die Begrenzungsflächen der prismatischen Körper - schräg zur äußeren Begrenzungsfläche des Beobachtungsfensters sind;

Figur 5 eine Aufsicht auf ein Beobachtungsfensterarray aus prismatischen Körpern;

Figur 6 ein Schnitt durch einen Beobachtungsdom;

Figur 7a ein prismatischen Ring aus mehreren prismatischen Körpern;

Figur 7b ein Prismenring;

Figur 8 ein Beobachtungsfenster aus Prismen;

Figur 9 einen Schnitt durch Figur 8 mit Detailbetrachtung;

Figur 10 eine schematische Betrachtung der optimalen Abbildung auf einen Detektor mit mehreren photosensiblen Flächen;

Figur 11 eine genaue Betrachtung der Bereiche von Figur 10 auf einem Detektorarray;

Figur 12 ein Beobachtungsfenster mit Abbildung des Beobachtungsraumes auf einen Detektor;

Figur 13 ein Beobachtungsfenster nach Figur 10 mit Bereichsvergrößerung auf einen separaten Detektor;

Figur 14 ein nach innen gewölbtes Beobachtungsfenster aus prismatischen Körpern.

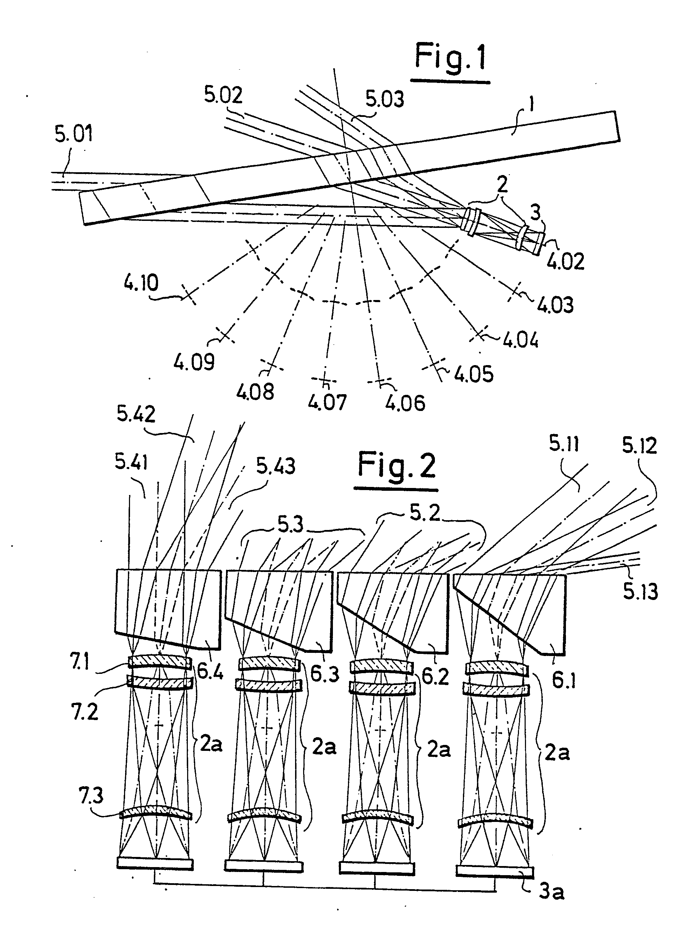

In Figur 1 wird die Realisierung des Weitwinkel-Ausblickes hinter einer durchsichtigen planparallelen Scheibe (1) mit einer Objektiv (2) -Detektor (3) -Kombination gezeigt. Die Objektiv (2) -Detektor (3) -Kombination wird dabei zur Aufnahme des Gesamtbildes hinter der durchsichtigen planparallelen Scheibe (1) unter Veränderung der Neigung der optischen Achse der Kombination (2.3) bezüglich der Flächennormalen der durchsichtigen planparallelen Scheibe (1) auf einer halbkugelartigen Fläche bewegt, wobei die Bildaufnahme in diskreten Positionen (4.02-4.10) erfolgt. Die genauen Bildaufnahmepositionen (4) der Objektiv (2) -Detektor (3) -Kombination ergeben sich aus den optischen Eigenschaften der durchsichtigen planparallelen Scheibe (1). Aus den in diesen diskreten Positionen (4) aufgenommenen Aufnahmen wird dann das Gesamtbild zusammengesetzt. Die drei repräsentativen Strahlengänge (5.01-5.03) zeigen den Bereich an, welcher durch das Objektiv (2) auf den Detektor (3) in der momentanen Aufnahmeposition (4.02) fällt.

Anstelle der Bewegung einer Objektiv (2) - Detektor (3) -Kombination können auch mehrere Kombinationen bewegt werden, oder mehrere Objektiv (2) -Detektor (3) -Kombinationen in verschiedenen Aufnahmepositionen (4.02-4.10) feststehend vorhanden sein.

In Figur 2 ist ein Ausschnitt eines aus prismatischen Körpern (6.1-6.4) aufgebauten Beobachtungsfensters mit jeweils einer Objektiv (2a) - Detektor (3a) -Kombination hinter jedem prismatischen Körper (6.1-6.4) gezeigt. Das Objektiv (2a) selbst ist hier aus drei Einzellinsen (7.1-7.3) aufgebaut. Als Detektor (3a) kann jeder für den jeweiligen Spektralbereich geeignete strahlungsempfindliche Meßwertaufnehmer verwendet werden, wobei sein innerer Aufbau unerheblich und die Gestaltung seiner Meßfläche (Punkt, Linie, Array) von den konkreten Anforderungen abhängig ist. Die Form der prismatischen Körper (6.1-6.4) ist in verschiedenen Positionen unterschiedlich, wodurch jeweils ein anderer Winkelbereich erfaßt wird. Durch repräsentative Strahlengänge (5.11-5.43) ist der jeweilige Teil des Ausblicks durch die einzelnen prismatischen Körper (6.1-6.4) verdeutlicht.

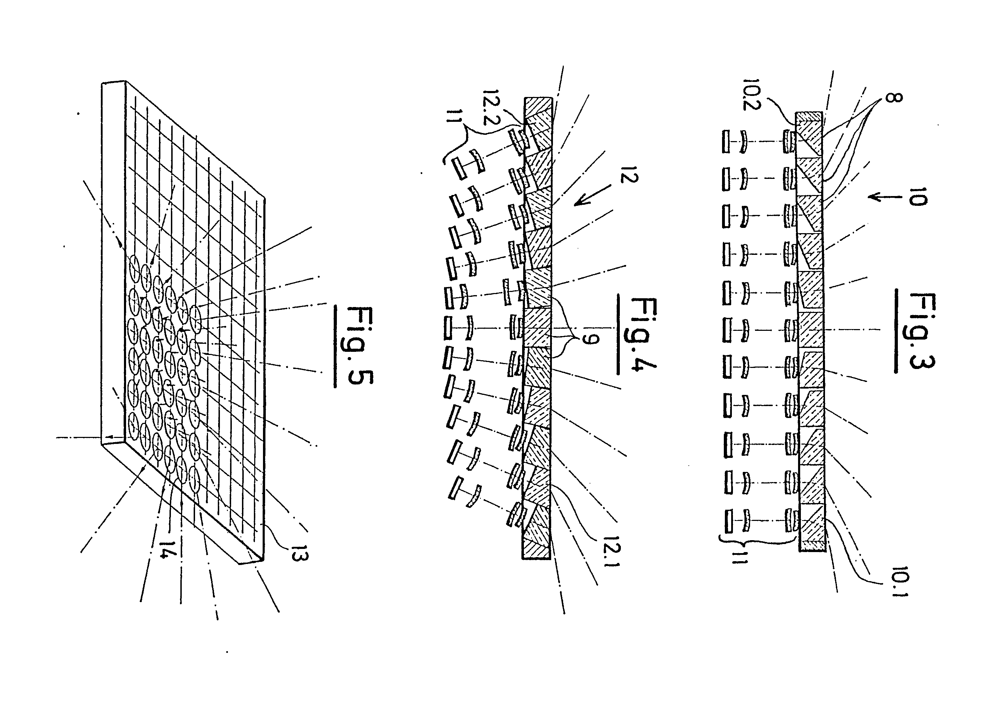

In Figur 3 ist ein Schnitt durch ein Beobachtungsfenster (10) gezeigt, welcher eine Anordnung der Objektiv-Detektor-Kombination (11) ermöglicht. Hinter jedem prismatischen Körper (8) des Beobachtungsfensters (10) befindet sich eine Objektiv-Detektor-Kombination (11). Der besondere Vorzug des Beobachtungsfensters (10) wird in dieser Figur besonders deutlich. Obwohl die äußere Begrenzungsfläche (10.1) des Beobachtungsfensters (10) vollkommen plan ist, wird durch die besondere Formgebung der Innenfläche (10.2) der prismatischen Körper (8) des Beobachtungsfensters (10) eine optische Wirkung erreicht, welche einen Einblick in einen Winkelbereich ermöglicht, welcher nur durch den Grenzwinkel der Totalreflexion begrenzt wird. Für jeden prismatischen Körper (8) ist die Verlängerung der optischen Achse jeder Objektiv-Detektor-Kombination (11) gezeigt. Durch den Aufbau des Beobachtungsfensters (10) aus vielen einzelnen prismatischen Körpern (8) ergibt sich die Möglichkeit zwischen den einzelnen Körpern (8) durch die Art der Befestigung zwischen den einzelnen prismatischen Körper (8) eine sehr hohe Druckbelastbarkeit zu erreichen. Dadurch wird es durch diese Erfindung möglich sein, große Beobachtungsfenster (10) für einen Weitwinkel-Ausblick mit extrem hoher mechanischer Festigkeit realisieren zu können.

In Figur 4 ist ein Schnitt durch ein Beobachtungsfenster (12) gezeigt, bei welcher die Anordnung der Objektiv-Detektor-Kombinationen (11) sich in unterschiedlichen Schräglagen zur Flächennormalen der äußeren Begrenzungsfläche (12.1) befinden. Die äußere Begrenzungsfläche (12.1) des Beobachtungsfensters (12) ist wie in Figur 3 auch hierbei vollkommen glatt und die optische Wirkung wird nur durch die Formgebung der Innenseite (12.2) der prismatischen Körper (9) des Beobachtungsfensters (12) erreicht. Allerdings ergibt sich eine Winkeländerung der austretenden Strahlen zur Flächennormalen des Beobachtungsfensters durch die prismatischen Körper (9), weshalb die Objektiv-Detektor-Kombination (11) durch eine entsprechende Ausrichtung die Winkeländerung ausgleichen muß. Für jeden prismatischen Körper (9) ist die Verlängerung der optischen Achse jeder Objektiv-Detektor-Kombination (11) durch die prismatischen Körper (9) in den Raum vor dem Beobachtungsfenster (12) gezeigt.

In Figur 5 ist ein Beobachtungsfenster (13) aus einer zweidimensionalen Matrix runder prismatischer Körper (14) aufgebaut. Die prismatischen Körper (14) sind dabei so verdreht, daß, nur durch die Totalreflexion begrenzt, ein vollständiger Ausblick in eine Halbkugel möglich ist. Für jeden der prismatischen Körper (14) ist die Verlängerung der optischen Achse jeder Objektiv-Detektor-Kombination durch die einzelnen prismatischen Körper (14) in den Raum vor dem Beobachtungsfenster (13) gezeigt.

Selbstverständlich müssen die prismatischen Körper (14) keine kreis- oder ellipsenförmige Oberfläche haben, sondern es könnten auch rechteckige oder sogar dreieckige prismatische Körper verwendet werden. Die runde Form ist hier aus rein ästhetischen Gründen sinnvoll.

Das Beobachtungsfenster (13) als solches kann selbstverständlich auch nur aus einer Zeile oder Spalte der Matrix bestehen, wenn nur in einen begrenzten Raumbereich ein Ausblick notwendig ist.

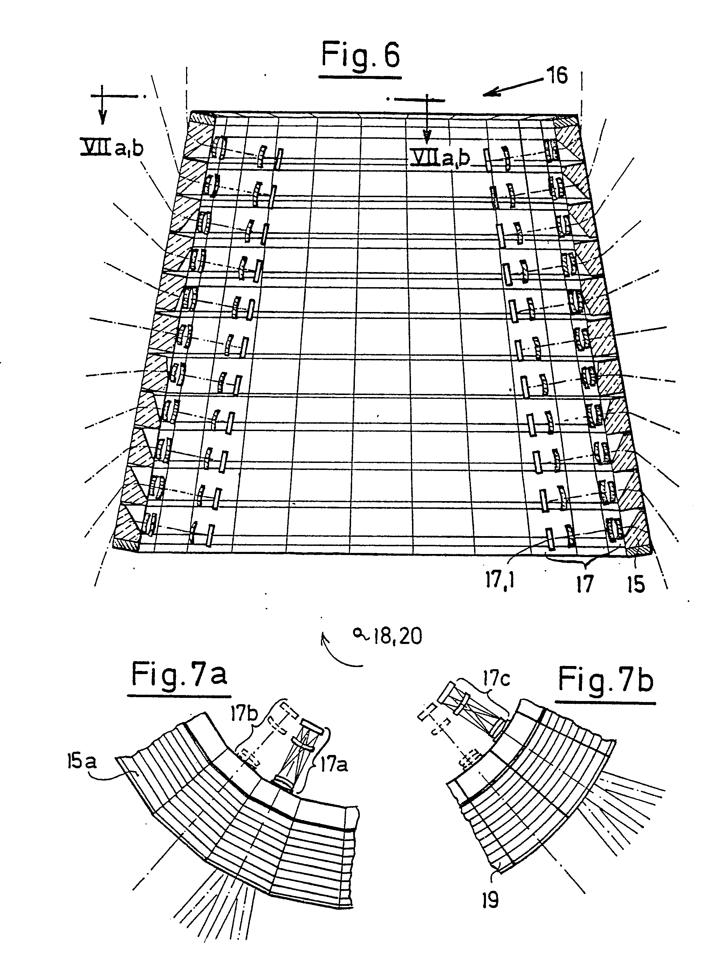

In Figur 6 ist aus den prismatischen Körpern (15) ein Beobachtungsdom (16) aufgebaut. Hinter jedem prismatischen Körper (15) befindet sich eine Objektiv-Detektor-Kombination (17), mit welcher ein gewisser Raumwinkelausschnitt betrachtet wird. Für jeden der prismatischen Körper (15) ist die Verlängerung der optischen Achse jeder Objektiv-Detektor-Kombination (17) durch die prismatischen Körper (15) in den Raum vor dem Beobachtungsdom (16) gezeigt. Die Form der prismatischen Körper (15) kann dabei in einen Ring, wie in der Figur 6 gezeigt, gleich sein, oder ein gewisser Raumbereich kann durch eine individuelle Formgestaltung der prismatischen Körper (15) detaillierter betrachtet werden. In dem man mehrere so aufgebaute "Ringe" übereinander legt, kann eine Vollkugel verzerrungsfrei auf die Detektoren (17.1) abgebildet werden, wobei im unteren Ausblickbereich lediglich ein Bereich von der doppelten Größe des Grenzwinkels der Totalreflexion nicht eingesehen werden kann, weshalb es sinnvoll ist, den Beobachtungsdom (16) dort zu halten. Anstelle der Vielzahl von Objektiv-Detektor-Kombinationen (17) kann auch eine geeignete Bewegungseinrichtung einen oder mehrere Objektiv-Detektor-Kombinationen (17) in dem Beobachtungsdom (16) derart bewegen, daß die einzelnen festen Aufnahmepositionen nacheinander erreicht werden. Eine entsprechende Halterung zwischen den prismatischen Körpern (15) sorgt für eine hohe mechanische Druckbelastbarkeit des Beobachtungsdomes (16).

In Figur 7a ist ein Schnitt durch die Figur 6 derart dargestellt, daß man auf einen Kreis aus gleichartigen prismatischen Körpern (15a) blickt. Hinter einem prismatischen Körper (15a) befindet sich eine Objektiv-Detektor-Kombination (17a). Für die beiden prismatischen Körper (15a) vor den Objektiv-Detektor-Kombinationen (l7a,b) ist außer der Verlängerung der optischen Achse der Objektiv-Detektor-Kombinationen (l7a,b) der Winkelabschnitt gezeigt, der durch den prismatischen Körper (15) vor der Objektiv-Detektor-Kombination (17a) eingesehen werden kann. Die Kombination (17a) wird nach der Aufnahme gegen den Uhrzeigersinn im Kreis bewegt und erreicht als nächste Aufnahmeposition die gestrichelte Position (17b). Die Drehung erfolgt dabei um die Rotationsachse (18).

In Figur 7b ist ein möglicher Schnitt durch die Figur 6 derart dargestellt, daß man auf einen prismatischen Kreiskörper (19) blickt, hinter sich eine Objektiv-Detektor-Kombination (17c) um die Rotationsachse (20) jeweils in diskrete Aufnahmepositionen dreht, bzw. jeweils die Strahlungswerte eines gewissen Winkelbereiches aufsummiert und als gemeinsamen Wert weitergibt. Dabei kann der prismatische Kreiskörper (19) auch, wie nicht aus der Zeichnung ersichtlich, ungeteilt sein.

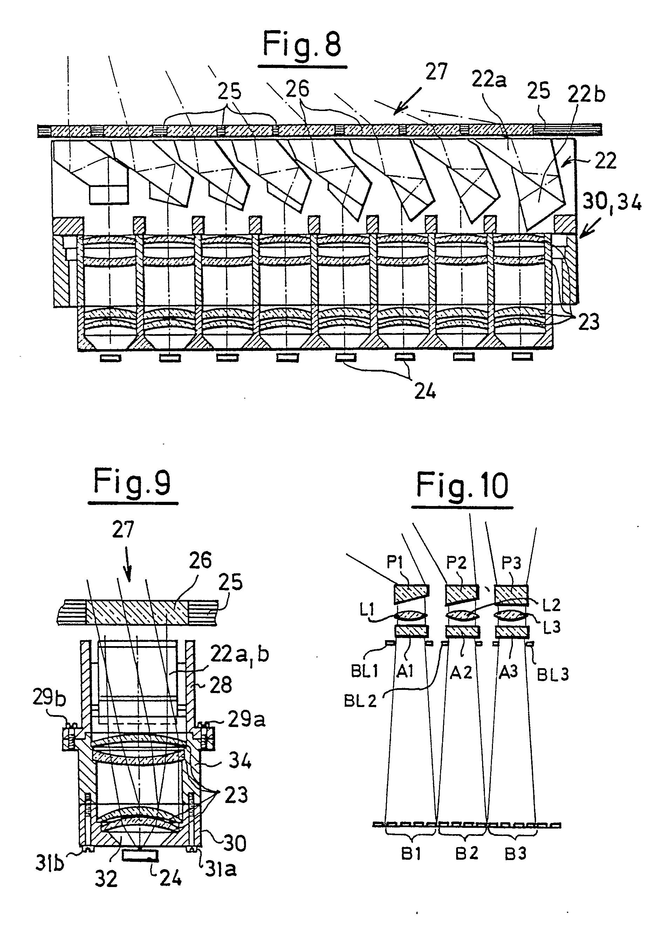

In Figur 8 ist ein Beobachtungsfenster (22) gezeigt, welches als prismatische Korper Prismen (22a,b) verwendet. Die Prismenwinkel sind als solche frei wählbar und ergeben sich aus den konkreten einzusehenden Winkelausschnitten für das Beobachtungsfenster (22). Durch die Verwendung von Prismen (22a,b) lassen sich die Nachteile von Dispersion und Verzeichnung ganz vermeiden. Entscheidend für die korrekte Funktion ist, daß die Brechung des eintretenden Strahles gleich der Brechung des austretenden Strahles ist. Die Prismenteile (22a, 22b) können dabei verkittet oder durch einen Luftspalt getrennt sein, solange im letzteren Fall der Grenzwinkel der Totalreflexion nicht überschritten wird. Hinter den Prismen (22a,b) befindet sich jeweils ein Gehäuse (30,34) für die Objektiv (23)-Detektor (24) -Kombination. In dieser Figur befindet sich vor dem Beobachtungsfenster (22) aus den Prismen (22a,b) ein Schutzfenster (27). Dieses Schutzfenster (27) hat zwischen den optisch durchlässigen Bereichen (26) zur Erhöhung der mechanischen Festigkeit Versteifungen (25), in welchen die optisch durchlässigen Bereiche (26) des Schutzfensters (27) befestigt sind.

Figur 9 zeigt ein detailliertes Ausführungsbeispiel von einem Teil der Figur 8. Man sieht, daß das Beobachtungsfenster aus Prismen (22a,b) besteht. Das Prisma (22a,b) wird in einer Prismenhalterung (28) gehalten, welche mit dem Gehäuse (34,30) für die Optik (23) verschraubt (29a,b) ist. Das Optikgehäuse (34,30) besteht aus zwei Teilen für die Aufnahme von jeweils zwei Linsen (23). Der untere Gehäuseteil (30), an dessen Unterseite der Detektor (24) sitzt, ist an dem oberen Gehäuseteil (34) angeschraubt (31a,b). Im Inneren ist das untere Gehäuseteil (30) nach dem unteren Linsenpaar (23) so geformt, daß sich aus der Gehäuseform vor dem Detektor (24) eine Strahlenbegrenzung (32) ergibt.

In Figur 10 ist eine schematische Skizze eines Beobachtungsfensters mit der Abbildung durch mehrere prismatische Körper (P) auf einen Detektor (B) zu sehen. Strahlung aus bestimmten Raumwinkelbereichen wird durch jeden der prismatischen Körper (P1,P2,P3) abgelenkt. Durch die sich hinter den fokussierenden Körpern (L1,L2,L3) befindlichen prismatischen Körper (A1,A2,A3) kann der abzubildende Raumbereich auf ganz bestimmte Regionen (B1,B2,B3) des Detektors (B) abgelenkt werden, wobei die Blenden (BL1,BL2,BL3) eine exakte Begrenzung der abzubildenden Raumbereiche ermöglichen. Dabei ist zu bedenken, daß der Detektor (B) nicht auf seiner ganzen Fläche photoempfindlich ist.

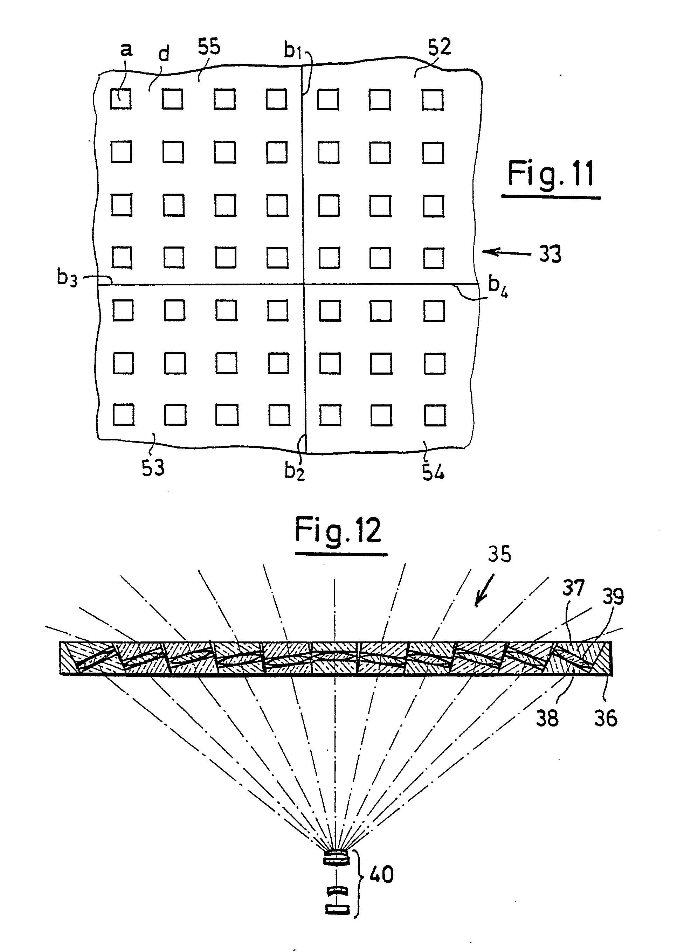

In Figur 11 ist berücksichtigt, daß ein photoempfindlicher Detektor (33) aus einer Aneinanderreihung von photoempfindlichen Flächen (a) besteht. Die Figur zeigt eine Aufsicht auf ein Detektorarray eines Detektors (33). Die Verwendung eines Detektors (33) für die Detektion durch mehrere prismatische Bereiche setzt voraus, daß man die durch die einzelnen prismatischen Körper abgebildeten Bereiche auf der Detektoroberfläche einwandfrei wiederfinden kann. Deshalb ist es vorteilhaft, die Grenzlinien (bl,b2,b3,b4) der abgebildeten Bereiche zwischen die photosensiblen Flächen (a) des Detektors (33) zu legen. Wenn man sich dann die einzelnen Bereiche (52,53,54,55) ansieht, welche auf den Detektor (33) durch die prismatischen Körper abgebildet werden, so liegen die Grenzlinien (bl,b2,b3,b4) auf dem Bereich (d) des Detektors (33), welcher nicht photoempfindlich ist. Wenn nun die prismatischen Körper dem Detektor (33) derart angepaßt sind, daß keine Überlappungen der abgebildeten Bereiche auftreten, kann man ein Bild eines Weitwinkelausblickes erhalten, dem man seine Entstehung nicht ansieht und dem keine störenden Linien überlagert sind.

In Figur 12 ist die Kombination eines Beobachtungsfensters (35) aus prismatischen Körpern (37,38) gezeigt. Die an der Außenseite des Beobachtungsfensters (35) befindlichen prismatischen Körper (37) dienen als Eingangsfläche für die auffallenden Strahlen. Durch die prismatischen Körper (38) der Innenseite erfolgt dann eine Ablenkung der eingefallenen Strahlung auf die Objektiv-Detektor-Kombination (40). Zwischen den prismatischen Körpern (38,39) erfolgt eine Fokussierung durch einen Körper (39) mit der Wirkungsweise einer Linse, wodurch die Strahlen auf einen gemeinsamen Brennpunkt gelenkt werden. Durch diesen Aufbau kann man auf einfache Weise einen raumüberwachenden Sensor aufbauen. Sowohl die prismatischen Körper (37,38) als auch der Linsenkörper (39) zwischen ihnen bilden eine kompakte Einheit, welche durch die Halterung (36) eine genügende, anpassungsfähige Festigkeit gegenüber Druckbelastungen erhält.

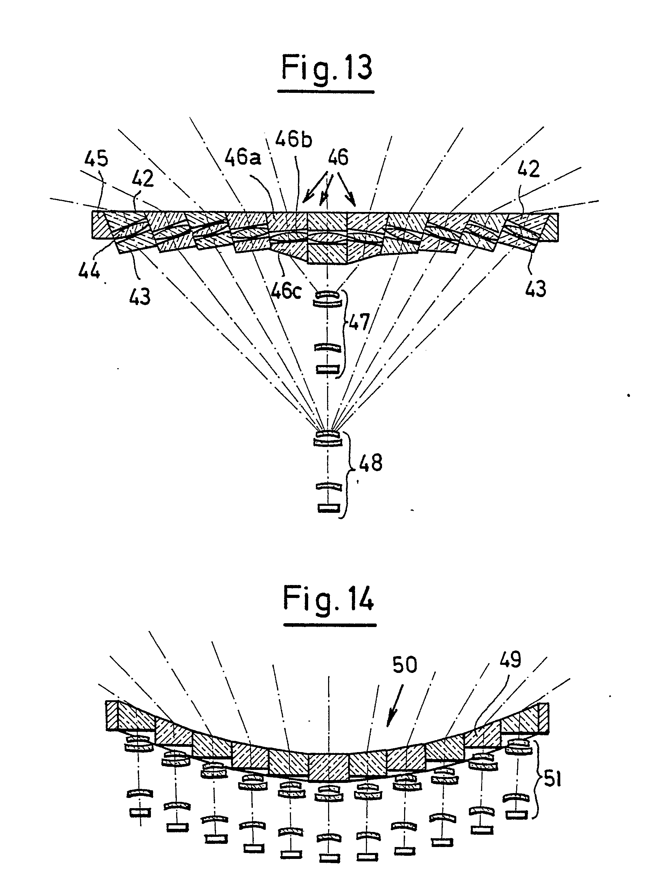

In Figur 13 ist eine Abwandlung aus Figur 12 zu sehen. Hierbei wird ein äußerer Bereich durch innere (42) und äußere (43) prismatische Körper sowie einem Körper (44) mit linsenartiger Wirkung auf eine gemeinsame Objektiv-Detektor-Kombination (48) abgebildet. Der innere Bereich (46) wird durch die äußeren (46a) und inneren (46c) prismatischen Körper sowie einem Körper (46b) zwischen ihnen mit linsenartiger Wirkung auf die separate Objektiv-Detektor-Kombination (47) abgebildet. Gehalten wird dieses Beobachtungsfenster durch die Halterung (45).

In Figur 14 wurde anstelle der flachen Außenfläche der vorherigen Beispiele ein Beobachtungsfenster (50) aufgebaut, daß aus prismatischen Körpern (49) ein nach innen gewölbtes Beobachtungsfenster (50) realisiert. Hinter den prismatischen Körpern (49) befindet sich jeweils eine Objektiv-Detektor-Kombination (51) oder es wird eine Objektiv-Detektor-Kombination (51), wie in der Figur 1 gezeigt, in die jeweilige Aufnahmeposition hinter die einzelnen prismatischen Körper (49) bewegt.

## Ansprüche

1. Beobachtungsfenster, welches die Erfassung der durch das Fenster eintretenden Strahlung innerhalb eines Weitwinkelbereiches ermöglicht, dadurch gekennzeichnet, daß dieses Fenster aus mehreren unterschiedlichen, prismatisch wirkenden Bereichen aufgebaut ist, wobei die einzelnen Bereiche auf mindestens einen Detektor abgebildet werden.

2. Beobachtungsfenster, welches die Erfassung der durch das Fenster eintretenden Strahlung innerhalb eines Weitwinkelbereiches ermöglicht, dadurch gekennzeichnet, daß hinter einer feststehenden planparallelen Scheibe ein aus mindestens einer Sammellinse bestehendes Objektiv vorhanden ist, welches einen Raumwinkelbereich auf einen photoempfindlichen Detektor abbildet und um eine Mittelpunktlage drehbar nacheinander in feststehende Aufnahmepositionen zur Durchführung jeweils einer, einem Winkelbereich zugeordneten Detektion bewegt wird.

3. Beobachtungsfenster, nach Anspruch 1, dadurch gekennzeichnet, daß dieses Fenster aus mehreren unterschiedlichen, prismatisch wirkenden Bereichen aufgebaut ist, wobei einzelnen Bereichen jeweils eine optische Einrichtung zur Abbildung der in diesem Bereich einfallenden Strahlung auf einen Detektor zugeordnet ist.

4. Beobachtungsfenster nach Anspruch 1, dadurch gekennzeichnet, daß jedem Winkelbereich ein prismatischer Körper und ein aus mindestens einer Sammellinse bestehendes Objektiv zugeordnet ist, welches die Strahlung aus dem erfaßten Winkelbereich auf einen photoempfindlichen Detektor abbildet.

5. Beobachtungsfenster nach Anspruch 1, 2 oder 3, dadurch gekennzeichnet, daß die Fensteroberfläche in Beobachtungsrichtung eben ist.

6. Beobachtungsfenster nach Anspruch 1, 2 oder 3, dadurch gekennzeichnet, daß sich vor dem Beobachtungsfenster ein Schutzfenster befindet.

7. Beobachtungsfenster nach Anspruch 6, dadurch gekennzeichnet, daß sich zwischen Schutzfenster und Strahleintrittsfläche der Prismen ein flüssiges oder gasförmiges Medium befindet.

8. Beobachtungsfenster nach Anspruch 1 oder 3, dadurch gekennzeichnet, daß die unterschiedlichen, prismatisch wirkenden Bereiche (14) in Form einer Matrix angeordnet sind.

9. Beobachtungsfenster nach Anspruch 1 oder 3, dadurch gekennzeichnet, daß die unterschiedlichen, prismatisch wirkenden Bereiche einen Kreisring bilden.

10. Beobachtungsfenster nach Anspruch 9, dadurch gekennzeichnet, daß mehrere Kreisringe zu einem Beobachtungsdom aufeinandergelegt sind.

11. Beobachtungsfenster nach Anspruch 1 oder 3, dadurch gekennzeichnet, daß jeder prismatisch wirkende Bereich aus zwei hintereinanderliegenden prismatisch wirkenden Körpern gebildet ist, zwischen denen ein abbildendes optisches Element angeordnet ist.

12. Beobachtungsfenster nach Anspruch 1 oder 3, dadurch gekennzeichnet, daß aus prismatisch wirkenden Bereichen ein nach innen gewölbtes Beobachtungsfenster aufgebaut ist.

## Fig.1

5.01  5.02  5.03  1

2  3

4.02

4.10  4.03

4.09  4.04

4.08  4.07  4.06  4.05

## Fig.2

5.42  5.41  5.43  5.3  5.2  5.11  5.12

5.13

7.1  6.4  6.3  6.2  6.1

7.2

2a  2a  2a  2a

7.3

3a

Fig. 3

Fig. 4

Fig. 5

0 292 764

Fig. 6

Fig.7a

Fig.7b

# Fig.8

# Fig.9

# Fig.10

0 292 764

Fig. 11

Fig. 12

## Fig. 13

## Fig. 14